# EUROPÄISCHE PATENTSCHRIFT

(11) **EP 0 554 484 B1**
(45) Veröffentlichungstag und Bekanntmachung des Hinweises auf die Patenterteilung: **19.06.1996**
(21) Anmeldenummer: 92101882.6
(22) Anmeldetag: 05.02.1992
(51) Int. Cl.: H02H 1/06, H02H 9/08

(54) **Drehstromnetzteil**
Three-phase power supply
Circuit d'alimentation triphasé

(43) Veröffentlichungstag der Anmeldung: 11.08.1993
(73) Patentinhaber: SIEMENS AKTIENGESELLSCHAFT, D-80333 München (DE)
(72) Erfinder: Müller, Andreas, Dipl.-Ing., W-8510 Fürth (DE); Windsheimer, Klaus, Dipl.-Ing. (FH), W-8533 Scheinfeld (DE)

(56) Entgegenhaltungen:
- EP-A- 0 114 292
- DE-A- 4 022 253
- US-A- 3 590 322
- US-A- 3 605 728
- ELECTRICAL ENGINEERING Bd. 78, Nr. 8, August 1959, NEW YORK US Seite 816 BODLE 'Electrical protection for transistorized equipment'

## Beschreibung

Die Erfindung betrifft ein Drehstromnetzteil mit Transformator-Primärwicklungen einerseits zum Anschluß an jeweils einen Phasenleiter R,S,T eines Drehstromsystems und andererseits zur elektrischen Verbindung mit dem Mittelpunktsleiter Mₚ des Drehstromsystems über einen herausgeführten Anschluß N des durch die Primärwicklungen gebildeten Sternpunktes, wobei zwischen dem Anschluß N und dem Sternpunkt der Primärwicklungen ein Relais-Schaltkontakt vorgesehen ist, der im Betrieb bei Überschreitung einer vorbestimmten Stromschwelle des Stromes im Mittelpunktsleiter geöffnet wird.

Ein derartiges Drehstromnetzteil ist bereits bekannt und in der europäischen Patentschrift EP 0 114 292 beschrieben. Die hier angegebene Ausführungsform hat den Vorteil, daß sowohl bei Ausfall zweier Phasenspannungen des Drehstromsystems als auch bei Erdschluß die volle Funktionsfähigkeit des Netzteils erhalten bleibt. Solche Anforderungen an eine hohe Zuverlässigkeit der Stromversorgung werden beispielsweise bei elektronischen Meß-, Tarif- und Schutzgeräten gestellt, die im EVU-Bereich eingesetzt werden. Im Gegensatz zum Einphasennetzteil ist der Betrieb eines Drehstromnetzteils in Sternschaltung mit Anschluß an den Mittelpunktsleiter Mp sogar noch bei Ausfall zweier Phasen des Drehstromsystems gewährleistet. Ein Erdschluß in einer Phase des Drehstromnetzes führt zur Spannungsanhebung um den Faktor √3 in den beiden anderen intakten Phasen. Der in diesem Fall erhöhte Stromfluß durch die Primärwicklungen und den Mittelpunktsleiter bringt den Transformator in Sättigung und überlastet ihn.

In der Patentschrift EP 0 114 292 wird daher als Gegenmaßnahme hierzu in der Verbindung zum Mittelpunktsleiter ein Relais-Schaltkontakt als Teil einer Erdschluß-Überwachungseinheit eingesetzt. Diese besteht aus einer Grenzwertschaltung, die eingangsseitig über einen Maximalwertdetektor mit einem künstlichen Sternpunkt und ausgangsseitig mit der Betätigungsspule eines Relais verbunden ist.

Wenn eine der drei Phasen des Drehstromsystems einen Erdschluß aufweist, so nimmt der Mittelpunktsleiter Mp deren "Phasenpotential" an und die Spannung zwischen einer intakten Phase und dem Mittelpunktsleiter steigt gegenüber dem ungestörten Zustand um den Faktor √3. Dadurch spricht der Grenzwertdetektor an und der Relais-Schaltkontakt in der Verbindung zwischen dem Sternpunkt des Transformators und dem Mittelpunktsleiter des Drehstromsystems wird durch die Betätigungsspule geöffnet.

Eine Alternative zur Lösung des dargestellten Problems ist durch einen Transformator gegeben, der zum Schutz gegen thermische Überlastung infolge eines Erdschlusses mit einem Kaltleiter betrieben wird. Durch die erhöhte Strombelastung in diesem Fall erwärmt sich der Kaltleiter und nimmt einen hochohmigen Wert an. Die Abkühlung des Kaltleiters gemäß der thermischen Zeitkonstante kann Stunden dauern, so daß für diesen Zeitraum der Stromfluß im Mittelpunktsleiter eingeschränkt ist. Ein Betrieb des Drehstromnetzteils an nur einer Phase ist während dieser Dauer nicht möglich, d.h. seine volle Funktionsfähigkeit ist vorübergehend gestört.

Daher besteht die Aufgabe der Erfindung, ein Drehstromnetzteil der obengenannten Art zu schaffen, das bei vereinfachter Ausbildung ohne einen aufwendigen Maximalwertdetektor sowohl bei Ausfall zweier Phasenspannungen als auch bei Erdschluß voll funktionsfähig bleibt. Die Aufgabe wird dadurch gelöst, daß anstelle des Relais-Schaltkontakts eine strombegrenzende Stromquelle vorgesehen ist. Diese Lösung bietet für den Transformator nicht nur einen Schutz bei Erdschluß sondern auch bei sonstigen Sternpunktverlagerungen. Eine vorteilhafte Ausgestaltung der Erfindung ist dadurch gegeben, daß die Stromquelle als Konstantstromquelle ausgeführt ist. Ein besonders einfacher Aufbau einer derartigen Konstantstromquelle, die nur wenige Bauelemente aufweist und demzufolgen auch entsprechend zuverlässig ist, wird dadurch erreicht, daß die Konstantstromquelle zwei in Reihe geschaltete Mosfets des Verarmungstyps aufweist, die durch einen ohmschen Widerstand mit einander verbunden sind, wobei jeweils das Tor des einen Mosfets mit der Quelle des anderen Mosfets verbunden ist. Weiterhin ist es zweckmäßig, daß parallel zur Konstantstromquelle eine Diodenschaltung als Stoßspannungsschutz liegt. Bei Geräten, die im EVU-Bereich eingesetzt werden, z.B. Zählern, werden hohe Ansprüche an die Zuverlässigkeit der Stromversorgung gestellt. Demzufolge erweist es sich als zweckmäßig, wenn das Drehstromnetzteil Bestandteil eines elektrischen Energieverbrauchszählers ist.

Eine Ausführungsform der Erfindung wird im folgenden anhand einer Zeichnung im einzelnen erläutert.

Es zeigen:
- FIG 1: eine Transformatorschaltung eines Drehstromnetzteils mit einer Stromquelle im Mittelpunktsleiter,
- FIG 2: eine Konstantstromquelle zum Einsatz in der Schaltung nach FIG 1,
- FIG 3: die Stromspannungskennlinie der Konstantstromquelle nach FIG 2.

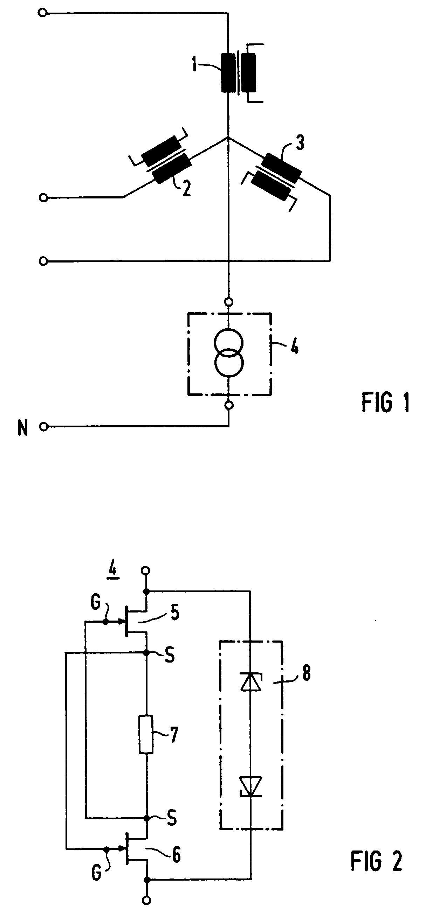

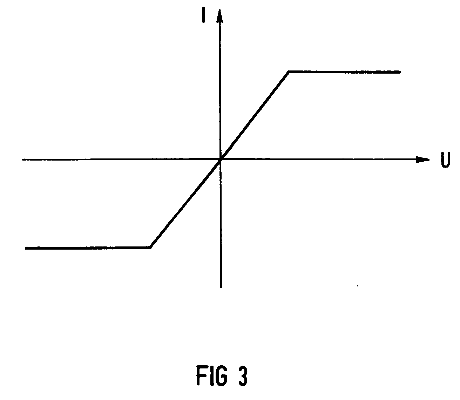

Beim Ausführungsbeispiel nach FIG 1 sind die drei Transformator-Primärwicklungen 1 - 3 einerseits jeweils mit einer Phase R, S bzw. T des Drehstromnetzes und andererseits untereinander verbunden. Zwischen den gemeinsamen Verbindungspunkt der drei Primärwicklungen 1 - 3 und den Anschluß N zum Anschluß an den Mittelpunktsleiter Mp des Drehstromnetzes ist ist eine strombegrenzende Stromquelle 4 geschaltet, die beispielsweise als Konstantstromquelle gemäß FIG 2 ausgeführt sein kann. Die Konstantstromquelle 4 begrenzt den Strom I unabhängig von der Spannung U in beiden Richtungen des Stromflusses, wie in FIG 3 dargestellt, auf einen definierten Wert und verhindert dadurch bei Erdschluß auftretende Strombelastungen, die den Transformator in die Sättigung treiben und einen Schaden an ihm verursachen.

FIG 2 zeigt eine Konstantstromquelle 4, bestehend aus zwei Mosfets 5, 6 vom Verarmungstyp, die über einen ohmschen Widerstand 7 in Reihe geschaltet sind. Dabei ist das Tor G des einen Mosfets jeweils mit der Quelle S des anderen Mosfets verbunden. Durch den ohmschen Widerstand 7 ist die konstante Stromschwelle gemäß FIG 3 in beiden Richtungen festgelegt. Er kann als Festwert-Widerstand oder als Potentiometer zur einfacheren Veränderung seines Wertes ausgeführt sein. Parallel zu dieser Schaltung liegt eine Diodenschaltung 8 zum Stoßspannungsschutz. Selbstverständlich sind für die Realisierung der Stromquelle auch andere Ausführungsformen denkbar mit abweichenden Stromspannungskennlinien.

## Patentansprüche

1. Drehstromnetzteil mit Transformator-Primärwicklungen (1 - 3) einerseits zum Anschluß an jeweils einen Phasenleiter R, S, T eines Drehstromsystems und andererseits zur elektrischen Verbindung mit dem Mittelpunktsleiter Mp des Drehstromsystems über einen herausgeführten Anschluß N des durch die Primärwicklungen (1 - 3) gebildeten Sternpunktes, zwischen dem Anschluß N und dem Sternpunkt der Primärwicklungen (1 - 3) **dadurch gekennzeichnet,** daß eine strombegrenzende Stromquelle (4) vorgesehen ist.

2. Drehstromnetzteil nach Anspruch 1, **dadurch gekennzeichnet,** daß die Stromquelle als Konstantstromquelle (4) ausgeführt ist.

3. Drehstromnetzteil nach Anspruch 2, **dadurch gekennzeichnet,** daß die Konstantstromquelle (4) zwei in Reihe geschaltete Mosfets (5, 6) des Verarmungstyps aufweist, die durch einen ohmschen Widerstand (7) miteinander verbunden sind, wobei jeweils das Tor (G) des einen Mosfets (5 oder 6) mit der Quelle (S) des anderen Mosfets verbunden ist.

4. Drehstromnetzteil nach Anspruch 2 oder 3, **dadurch gekennzeichnet,** daß parallel zur Konstantstromquelle (4) eine Diodenschaltung (8) als Stoßspannungsschutz dient.

5. Drehstromnetzteil nach einem der vorangehenden Ansprüche, **dadurch gekennzeichnet,** daß dieses Bestandteil eines elektrischen Energieverbrauchszählers ist.

## Claims

1. Three-phase power supply unit with transformer primary windings (1 to 3) on one side for connection to a respective phase conductor R, S_{,} T of a three-phase system and on the other side for the electrical connection with the neutral conductor Mₚ of the three-phase system by way of a brought-out terminal N of the neutral formed by the primary windings (1 to 3), characterized in that between the terminal N and the neutral of the primary windings (1 to 3) a current-limiting current source (4) is provided.

2. Three-phase power supply unit according to claim 1, characterized in that the current source is designed as a constant-current source (4).

3. Three-phase power supply unit according to claim 2, characterized in that the constant-current source (4) has two series-connected depletion-type MOS FETs (5, 6), which are connected to each other by an ohmic resistance (7), whereby in each case the gate (G) of the one MOS FET (5 or 6) is connected to the source (S) of the other MOS FET.

4. Three-phase power supply unit according to claim 2 or 3, characterized in that parallel to the constant-current source (4) a diode circuit (8) serves as impulse voltage protection.

5. Three-phase power supply unit according to one of the preceding claims, characterized in that it is a component of an electrical power consumption meter.

## Revendications

1. Bloc d'alimentation en courant triphasé comportant des enroulements (1 à 3) primaires de transformateur destinés d'une part, au raccordement à un fil R, S, T de phase d'un système triphasé et d'autre part, à la liaison électrique avec le fil neutre Mp du système triphasé par l'intermédiaire d'une borne N sortie du point neutre formé par les enroulements primaires (1 à 3), caractérisé en ce qu'il est prévu une source (4) de courant limitant le courant entre la borne N et le point neutre des enroulements primaires (1 à 3).

2. Bloc d'alimentation en courant triphasé suivant la revendication 1, caractérisé en ce que la source de courant est sous la forme d'une source (4) de courant constant.

3. Bloc d'alimentation en courant triphasé suivant la revendication 2, caractérisé en ce que la source (4) de courant constant comporte deux mosfets (5, 6) du type à appauvrissement, qui sont branchés en série et qui sont reliés l'un à l'autre par une résistance ohmique (7), la porte (G) de l'un des mosfets (5 ou 6) étant reliée à la source (S) de l'autre mosfet.

4. Bloc d'alimentation en courant triphasé suivant la revendication 2 ou 3, caractérisé en ce qu'un circuit (8) à diode sert en parallèle avec la source (4) de courant constant, de protection contre les tension de choc.

5. Bloc d'alimentation en courant triphasé suivant l'une des revendications précédentes, caractérisé en ce qu'il fait partie d'un compteur de consommation d'énergie électrique.
